# DEMANDE DE BREVET EUROPEEN

(11) **EP 1 785 554 A1**
(43) Date de publication de la demande: **16.05.2007**
(21) Numéro de dépôt: 06291748.9
(22) Date de dépôt: 10.11.2006
(51) Int. Cl.: E04H 17/26, A01G 17/14

(54) **Machine pour enfoncer des piquets, et piquets adapté à cette machine**

(30) Priorité: 10.11.2005 FR 0511470
(71) Demandeur: Earl Batillat - Carre, 10250 Neuville sur Seine (FR)
(72) Inventeur: Batillat, Patrick, 10250 Neuville sur Seine (FR)
(74) Mandataire: Debay, Yves

(57) **Abrégé**

Machine manuelle portable pour enfoncer des piquets (9) comportant des moyens de mise en place et d'enfoncement des piquets dans le sol caractérisé en ce que les moyens de mise en place et d'enfoncement dans le sol sont constitués d'une barre creuse (1) dans laquelle peut être inséré un piquet (9), la longueur de la barre creuse (1) étant inférieure à celle de la hauteur de dépassement souhaité du piquet (9) par rapport au sol, la barre creuse comportant à une extrémité une pièce de frappe (7), de à la barre creuse (1), de moyens de préhension (3,3') situés sous la pièce de frappe (7), la barre creuse (1) étant par au moins son autre extrémité solidaire, par une liaison (51,52) permettant un ajustement verticale par translation, d'une extrémité d'une tige de support (2) formant les moyens de support, disposée parallèlement à la barre creuse (1) et comportant au moins un moyen mobile de blocage (6) du déplacement de la barre creuse (1) lors de la translation verticale en direction du sol.

## Description

La présente invention concerne une machine destinée à enfoncer des piquets, et plus particulièrement une machine manuelle permettant d'enfoncer des piquets de vigne dans le sol, ainsi que le piquet adapté à cette machine.

Il est déjà connu des dispositifs permettant de réaliser de façon mécanique l'enfoncement des piquets. Ces dispositifs sont en général prévus pour être montés sur un véhicule porteur, par exemple un tracteur agricole, et mettent en oeuvre une masse d'un poids suffisant actionnée par un mécanisme à bras articulé mis en mouvement à partir du circuit hydraulique du tracteur. Cette masse frappe verticalement l'extrémité supérieure du piquet afin de l'enfoncer dans le sol.

C'est ce que propose le brevet FR 2 721 047 qui décrit un dispositif pour l'enfoncement de piquet dans le sol. Ce dispositif est monté sur un véhicule porteur de type tracteur agricole. Il est constitué par un bâti inclinable, qui est destiné à être monté sur le véhicule porteur, un ensemble de positionnement inclinable latéralement orienté dans la direction d'avance du tracteur et un ensemble de frappe comportant un marteau pour creuser des avants trous et enfoncer les piquets. Le bâti comporte un ensemble de vérins et de glissières qui permet de positionner le marteau afin de frapper sur la barre qui va réaliser les avants trous. Les avants trous sont réalisés en enfonçant une barre dont l'extrémité est pointue sous l'action d'un marteau. Cette barre étant maintenue en position verticale par des bagues fixées sur un guide qui permet un appui au sol. C'est le même marteau qui va ensuite servir à enfoncer les piquets. Pour cela le piquet est pincé à l'extrémité du marteau au niveau d'un rebord de maintien et sous l'action du marteau est enfoncé dans le sol. L'ensemble est alimenté à partir du circuit hydraulique du véhicule porteur, et le marteau peut être un marteau pneumatique alimenté par l'intermédiaire d'un compresseur. Le fonctionnement du dispositif est commandé depuis le poste de conduite de l'engin porteur par le conducteur au moyen d'un pupitre de commande.

Le brevet FR 2 811 197 décrit aussi une machine automatique tractée destinée à enfouir dans le sol des plants, et/ou des piquets. Elle est plus particulièrement adaptée à la plantation des plants de vigne mais peut être utilisée pour la plantation d'arbustes et autres plants. Cette machine comporte un dispositif permettant l'alignement des piquets et leur espacement, un dispositif ouvrant un sillon et le refermant après mise en place du plant et / ou du piquet, une palette de stockage des plants, lesquels seront enfouis manuellement dans le sillon, un dispositif de mise en place des piquets à partir d'un bac de chargement et un dispositif d'arrosage du plant avant son enfouissement dans le sol. Le dispositif de mise en place des piquets est entièrement automatisé à partir du bac de chargement et comporte des moyens de détection de l'avancement du tracteur par rapport au sol destinés à piloter des moyens de transport des piquets, des moyens de mise à la verticale des piquets, des moyens d'enfoncement des piquets dans le sol. Le maintien en position verticale sous le système d'enfonçage est constitué d'un vérin destiné à pousser le piquet, libéré d'une pince de transport, dans une pince similaire à cette dernière dont les branches s'ouvriront lors de l'enfoncement du piquet. Le système d'enfonçage des piquets est constitué de glissières horizontale, verticale et oblique de façon que la tête d'enfonçage animée par un vérin ait une course oblique permettant à cette tête de reculer pour compenser l'avancement du tracteur.

Un inconvénient de ces dispositifs automatiques est le fait qu'ils ne peuvent pas être utilisés lorsqu'il y a peu de piquets à planter pour une question de rentabilité financière.

Un autre inconvénient est qu'ils nécessitent de toujours être alimentés par le circuit hydraulique ou autre du véhicule porteur pour fonctionner, et ne sont donc pas indépendant ce qui poser problème lors notamment de panne du tracteur ou sur les terrains trop en pente inaccessibles au tracteur.

Le brevet FR 2 650 726 décrit un procédé de fabrication de piquets de vigne tubulaires en tôle galvanisée, et notamment un outil pour planter de tels piquets. Les piquets fabriqués par le procédé sont des piquets creux. Pour être enfoncé dans le sol le piquet est enfilé sur un outil, constitué d'une barre en acier durci analogue à une barre à mine. La section courante de la barre est très légèrement supérieure à celle du piquet de façon à ce qu'il puisse coulisser aisément sur la barre, sans jeu latéral excessif. La barre est plus longue que le piquet, de façon qu'une première de ses extrémités façonnée en pointe émerge d'une extrémité du piquet, pour ouvrir le passage dans le sol de ce piquet. Une seconde extrémité de la barre dépasse de l'extrémité supérieure du piquet. A proximité de la seconde extrémité, la barre est munie d'une bague en saillie périphérique, afin de former une butée pour l'extrémité supérieure du piquet et obliger ce dernier à accompagner la barre lors de l'enfoncement de celle-ci. La barre peut être enfoncée dans le sol en frappant la tète à la masse. Mais il est possible aussi de la connecter à une alimentation hydraulique ou autre.

Un inconvénient de ce dispositif est qu'il n'utilise pas de guide pour maintenir le piquet et prendre appui sur le sol. Les piquets ne peuvent donc pas être tous enfoncés à la même profondeur, ni enfoncés droit. La masse écrase la tête du piquet ce qui peut rendre l'enlèvement de l'outil plus difficile.

Un autre inconvénient est que ce dispositif ne se suffit pas à lui-même, c'est-à-dire qu'il nécessite l'utilisation d'une masse ou tout autre outil de frappe pour enfoncer les piquets. Cela implique que l'utilisateur soit en mesure d'exercer une force de frappe suffisante, ou alors l'utilisation d'une alimentation hydraulique ou autre connecté à un appareil du type tracteur pour actionner une masse.

De plus en frappant avec une masse l'utilisateur contrôle mal la direction des coups ce qui inévitablement provoque soit l'enfoncement de travers du piquet, soit le pliage du piquet.

La présente invention a donc pour objet de supprimer un ou plusieurs des inconvénients de l'art antérieur.

Ce but est atteint en définissant une machine manuelle portable pour enfoncer des piquets comportant des moyens de mise en place et d'enfoncement des piquets dans le sol caractérisé en ce que les moyens de mise en place et d'enfoncement dans le sol sont constitués d'une barre creuse dans laquelle peut être inséré un piquet , la longueur de la barre creuse étant inférieure à celle de la hauteur de dépassement souhaité du piquet par rapport au sol, la barre creuse comportant à une extrémité une pièce de frappe, de moyens de guidage d'un piquet insérés dans la barre creuse et fixés à la barre creuse, de moyens de préhension situés sous la pièce de frappe, la barre creuse étant par au moins son autre extrémité solidaire, par une liaison permettant un ajustement verticale par translation, d'une extrémité d'une tige de support formant les moyens de support, disposée parallèlement à la barre creuse et comportant au moins un moyen mobile de blocage du déplacement de la barre creuse lors de la translation verticale en direction du sol.

Selon une autre particularité de l'invention les moyens de préhension sont constitués par deux poignées disposées en dessous de la pièce de frappe en vis-à-vis l'une de l'autre, perpendiculairement par rapport à la barre creuse et décalées angulairement par rapport à l'axe formé par la tige de support.

Selon une autre particularité de l'invention les moyens de guidage sont constitués par un fer plat dont la longueur est supérieure à celle de la barre creuse pour faciliter l'introduction et éviter le pliage du piquet à sa sortie de la barre creuse.

Selon une autre particularité de l'invention le fer plat est fixé par un de ses cotés à la barre creuse par au moins deux soudures réalisées à chacune des extrémités de la barre creuse sur sa paroi interne verticale.

Selon une autre particularité de l'invention la distance entre le fer plat et la paroi interne verticale de la barre creuse est suffisamment grande pour permettre l'insertion de piquets de différentes largeurs.

Selon une autre particularité de l'invention la pièce de frappe est plate et de diamètre identique à celui de la barre creuse et constitue avec la barre creuse une masse, comprise entre 0,5 et 5 kg, suffisante pour permettre l'enfoncement du piquet.

Selon une autre particularité de l'invention la pièce de frappe comporte un viseur d'alignement de forme rectangulaire fixé au centre de la pièce de frappe sur la face opposée à celle en contact avec la barre creuse permettant d'aligner la barre creuse par rapport aux autres piquets.

Selon une autre particularité de l'invention la liaison permettant une translation verticale de la barre creuse est réalisée avec au moins deux écrous de fixation fixés sur la barre creuse dans lesquels la tige de support est insérée et coulisse, un premier écrou de fixation étant fixé à l'extrémité de la barre creuse opposée à celle où se trouve la pièce de frappe, un deuxième écrou de fixation étant fixé à une distance suffisante du premier écrou pour permettre à la tige de support d'être maintenue parallèle à la barre creuse

Selon une autre particularité de l'invention le moyen mobile de blocage de la barre creuse est un écrou disposé autour de tige de support de façon à être situé sous le premier écrou de fixation de la barre creuse pour le bloquer lors de translation verticale en direction du sol.

Selon une autre particularité de l'invention la tige de support comporte à son extrémité en contact avec le sol une pièce plate et plus large que la tige de support pour éviter son enfoncement dans le sol.

Selon une autre particularité de l'invention la tige de support a une longueur égale ou supérieure à celle de la barre creuse.

Selon une autre particularité de l'invention la barre creuse a une section ronde ou en forme de parallélogramme.

Selon une autre particularité de l'invention chaque poignée comporte un élément en matière plastique en forme de tube, l'élément en matière plastique entourant la poignée.

Selon une autre particularité de l'invention, deux poignées sont fixées à la barre creuse en vis-à-vis l'une de l'autre et sont constituées chacune d'une barre pliée, fixée à ces deux extrémités sur la barre creuse, et tel que son axe d'alignement est colinéaire avec l'axe d'alignement de la barre creuse.

Selon une autre particularité de l'invention, la barre creuse comporte des fentes à l'extrémité opposée de la pièce de frappe permettant d'écarter des pans ainsi formés par les fentes, et permettant de donner une forme évasée à l'extrémité de la barre creuse.

Un autre but de l'invention est de proposer une utilisation de la machine selon l'invention.

Ce but est atteint avec une utilisation de la machine caractérisée en ce qu'elle consiste à :
- insérer le piquet dans la barre creuse,
- régler la hauteur de l'écrou de blocage en fonction de la longueur de piquet à enfoncer,
- déplacer verticalement la barre creuse à l'aide des poignées,
- relâcher la barre creuse afin que la pièce de frappe formant une masse inertielle frappe en direction du sol sur le piquet et l'enfonce,
- répéter les étapes précédentes si nécessaire jusqu'à ce que le piquet soit enfoncé à la profondeur voulue.

Un autre but de l'invention est de proposer un piquet de vigne adapté à la machine pour enfoncer les piquets selon l'invention.

Ce but est atteint en définissant un piquet de vigne adapté à la machine selon l'invention caractérisé en ce qu'il a une forme en U lui permettant d'être introduit par coulissement dans la barre creuse autour du fer plat.

Selon une autre particularité de l'invention le piquet comporte sur les deux cotés formant les branches du U des crochets formés par le découpage du piquet.

L'invention, avec ses caractéristiques et avantages, ressortira plus clairement à la lecture de la description faite en référence aux dessins annexés donnés à titre d'exemples dans lesquels :
- la figure 1 est une vue de face représentant un mode de réalisation possible de l'invention ;
- les figures 2A et 2B représentent une vue de profil d'un mode de réalisation possible de l'invention avec la barre creuse coulissant vers le haut (A) et la barre creuse coulissant vers le sol (B) ;
- la figure 3 représente une vue en élévation de l'insertion d'un piquet à section ronde dans la barre creuse de la machine selon l'invention.
- La figure 4 représente une vue en élévation de l'insertion d'un piquet à section en forme de parallélogramme.
- la figure 5 est une vue de face représentant une variante de mode de réalisation possible de l'invention ;
- la figure 6 est une vue de profil représentant une variante de mode de réalisation possible de l'invention ;
L'invention va à présent être décrite en référence aux figures 1 à 5.

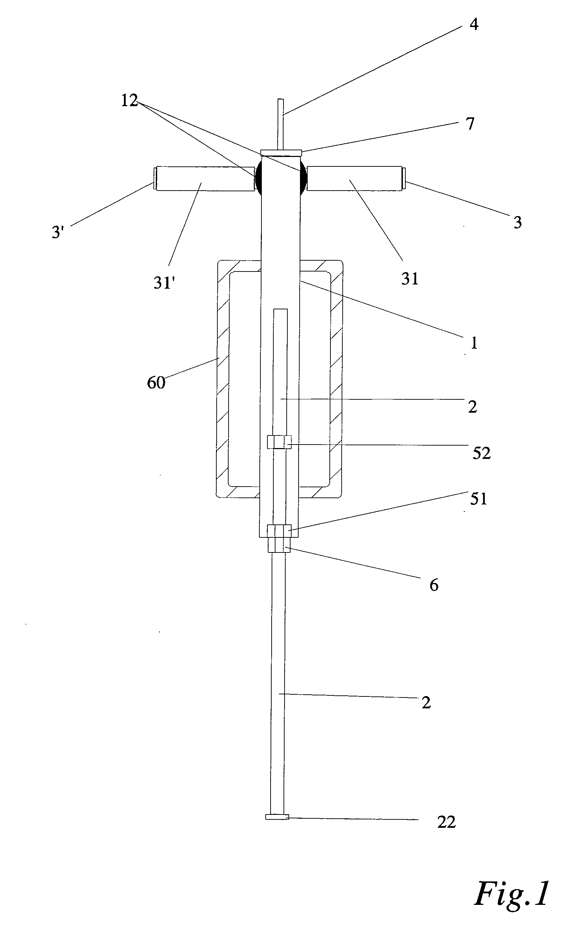

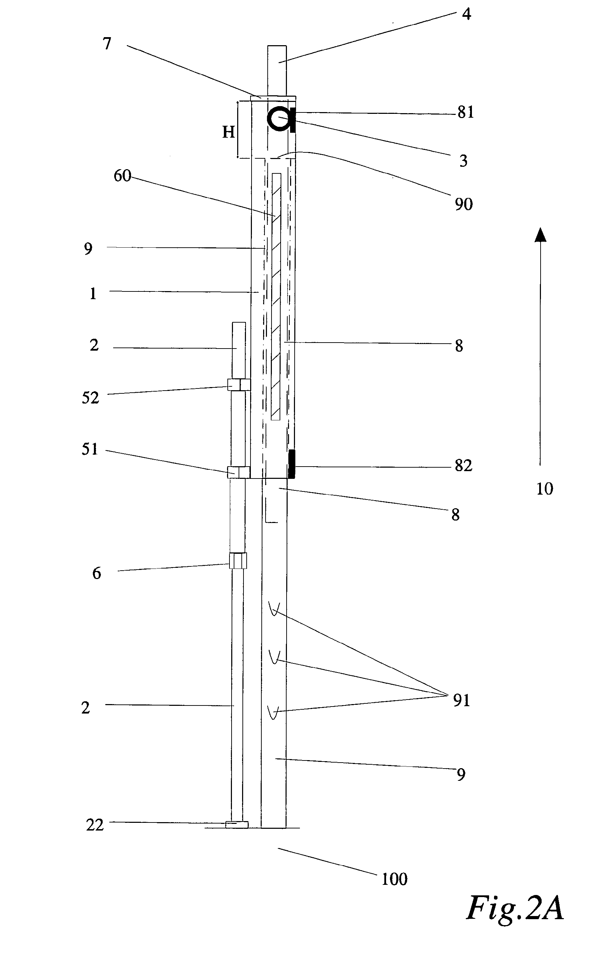

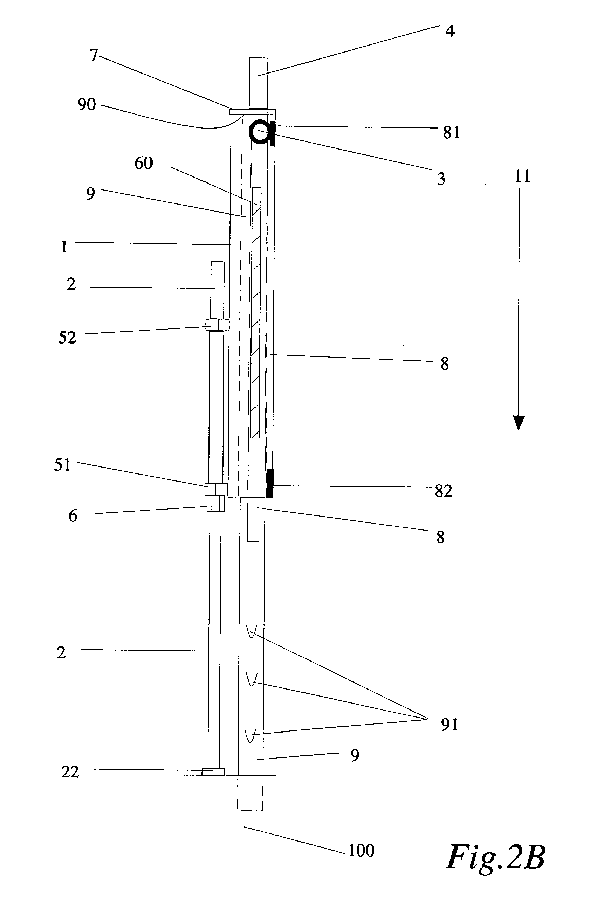

Comme illustré sur les figures 1 et 2, la machine pour enfoncer les piquets (9) selon l'invention est constituée d'une barre creuse (1). Cette barre creuse (1) a une longueur inférieure au piquet de vigne utilisé traditionnellement.

Une des extrémités de la barre creuse (1) comporte une pièce de frappe (7). Cette pièce de frappe (7) a une largeur identique à celle de la barre creuse (1). Elle est fixée à la barre creuse (1) de façon à en fermer l'extrémité, ou est formée d'un bloc avec celle-ci.

L'ensemble formé par la pièce de frappe (7) et la barre creuse (1) a un poids de 0,5kg à 10kg et de préférence de 0,5kg à 5kg et va permettre d'obtenir l'effet masse qui va être utilisé pour enfoncer le piquet (9).

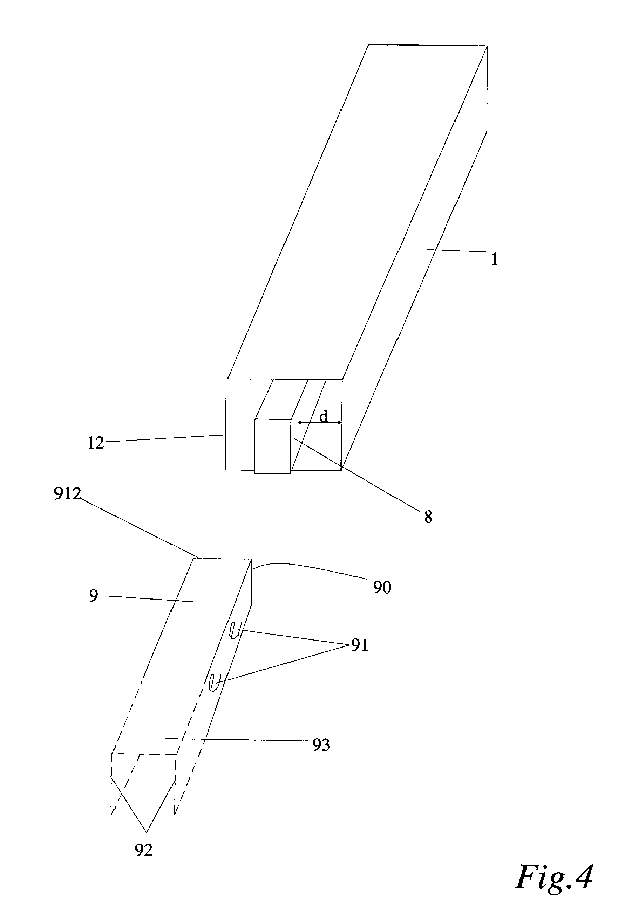

Sur cette pièce de frappe (7) est disposé un viseur d'alignement (4) de forme rectangulaire fixé au centre de la pièce de frappe (7) sur la face opposée à celle en contact avec la barre creuse (1). Ce viseur d'alignement (4) est utilisé pour vérifier l'alignement du piquet (9) lorsqu'il est enfoncé avec la machine selon l'invention. A l'intérieur de cette barre creuse (1) est disposé un fer plat (8) visible sur les figures 2 et 4. Le fer plat (8) a une longueur supérieure à celle de la barre creuse (1) de façon à dépasser de ce dernier. Ce fer plat (8) est fixé à la paroi interne verticale de la barre creuse (1) par au moins deux soudures (81,82). Une première soudure (81) est située à l'extrémité de la barre creuse (1) où est située la pièce de frappe. Une deuxième soudure (82) est située à l'autre extrémité de la barre creuse (1). Deux soudures suffisent à maintenir la barre creuse (1), mais le fer plat (8) peut être fixé à la barre creuse (1) avec plus de deux soudures.

Dans cette variante, deux poignées (60) sont fixées sur la barre creuse (1). Les poignées (60) sont constituées, par exemple, chacune d'une barre pliée, fixées à ces deux extrémités sur la barre creuse. Les deux poignées (60) sont en vis-à-vis l'une de l'autre, et leur axe d'alignement est colinéaire avec l'axe de la barre creuse (1).

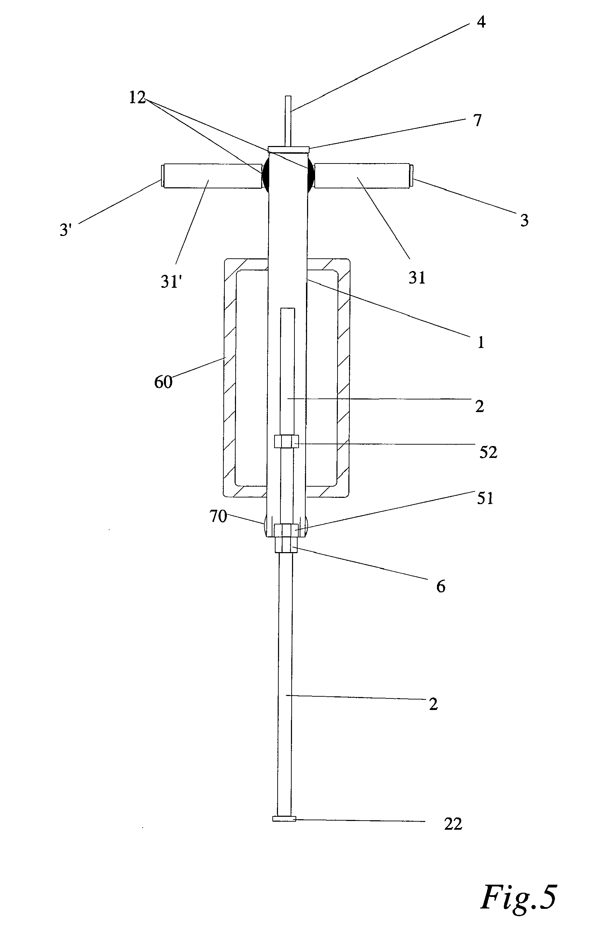

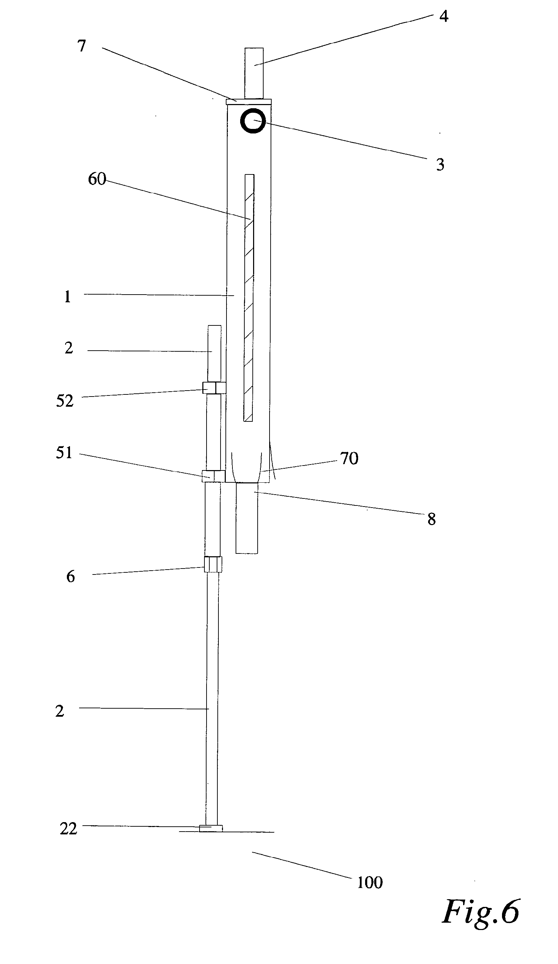

Dans une variante de réalisation illustrée sur les figures 5 et 6, l'extrémité de la barre creuse (1) opposée à celle comportant la pièce de frappe (7) est évasée. Cet évasement est réalisé de façon à ce que l'extrémité de la barre creuse (1) ait une forme ovale. Pour cela l'extrémité de la barre creuse (1) comporte des fentes (70) qui vont permettre d'écarter les pans ainsi formés par les fentes, ce qui permet à l'extrémité de la barre creuse (1) d'avoir une forme évasée. Tous les pans ne sont pas écartés, de façon à obtenir la forme ovale.

Le fer plat (8) dont la longueur est supérieure à celle de la barre creuse (1) va donc dépasser de celui-ci de quelques centimètres et ainsi faciliter l'insertion du piquet (9) dans la barre creuse et éviter le coudage du piquet lors des frappes pour enfoncer le piquet.

Dans une autre variante de réalisation illustrée sur les figures 1,2 et 3, la distance (d) entre le fer plat (8) et la surface intérieure de la barre creuse (1) est suffisamment grande pour permettre l'insertion de piquet de largeurs différentes. Toutefois, cette distance entre le fer plat (8) et la surface intérieure de la barre creuse (1) est limitée afin d'éviter le pliage du piquet lors de la frappe.

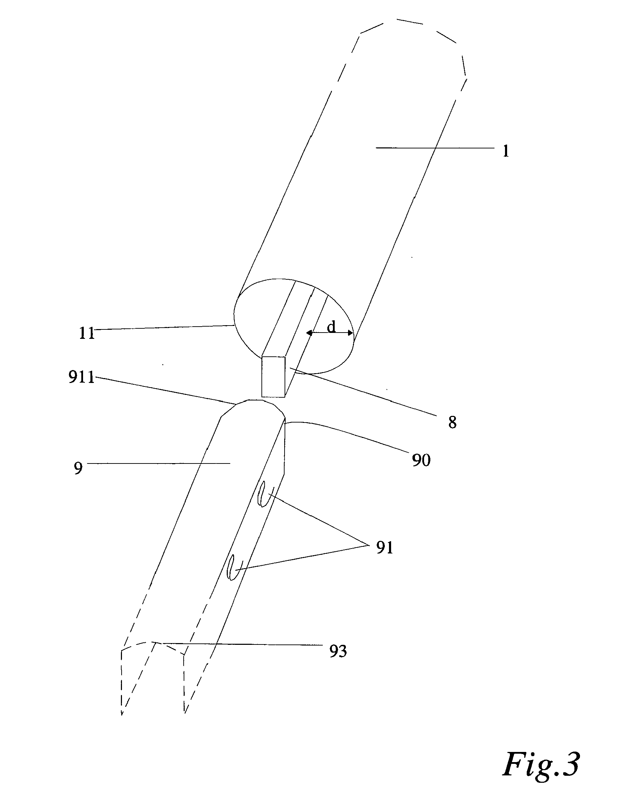

Dans ce cas, comme cela est illustré sur les figures 3 et 4, la barre creuse du dispositif selon l'invention peut avoir une section ronde (11) ou en forme de parallélogramme (12). Cela permet l'utilisation de piquets de formes différentes, par exemple ronds (911) ou carrés (912).

L'extrémité de la barre creuse (1) opposée à celle comportant la pièce de frappe (7) est maintenue solidaire d'une tige de support (2). La liaison entre la tige de support (2) et la barre creuse (1) est réalisée avec au moins deux écrous de fixation (51, 52). Un premier écrou (51) est fixé à l'extrémité de la barre creuse (1) opposée à celle comportant la pièce de frappe (7) et un deuxième écrou (52) est fixé au dessus du premier écrou (51). Ces deux écrous (51,52) sont suffisamment espacés de façon à ce que la tige (2) soit maintenue droite et parallèle à la barre creuse (1). Le fait que les écrous (51,52) soient suffisamment séparés permet aussi à la liaison d'être plus solide. La tige de support (2) est donc insérée dans les écrous (51,52) fixés sur la barre creuse (1). Cela permet de maintenir la barre creuse (1) en élévation par rapport au sol (100) à une distance déterminée, ce qui est utilisé pour enfoncer le piquet (9) à une profondeur voulue. Pour bloquer la barre creuse (1) et éviter qu'elle ne descende, la tige de support (2) comporte un écrou de blocage (6). Cet écrou (6) est donc positionné de façon à se trouver sous les deux écrous (51,52) fixés sur la barre creuse (1). C'est le premier écrou de fixation (51) de la barre creuse (1) qui en prenant appui sur l'écrou de blocage (6) va empêcher la barre creuse (1) de glisser en direction du sol (100). Par contre cet écrou de blocage (6) n'empêche pas la barre creuse (1) de coulisser dans la direction opposée au sol. Cet écrou (6) est mobile le long de la tige de support (2) puisque c'est lui qui va permettre de déterminer la distance à laquelle la barre creuse (1) doit se trouver du sol (100) et ainsi définir la profondeur à laquelle le piquet (9) sera enfoncé.

Le piquet (9) adapté à ce type de machine est donc un piquet (9) à section en U. C'est à dire avec une partie arrondie (93) comportant de chaque coté une branche formant les branches du U (92). La longueur du piquet (9) est celle d'un piquet traditionnelle et est supérieure à celle de la barre creuse (1). Sur chacune des branches du U (92) sont disposés des crochets (91). Ces crochets (91) sont alignés le long de la barre creuse (1). Ils sont formés par découpage incomplet en forme ovale de la barre creuse (1), la partie découpée étant décollée de la barre creuse (1) pour former le crochet.

Ainsi le piquet peut être inséré dans la barre creuse (1) et sa section en U va lui permettre de coulisser le long du fer plat (8) sans être gêné par les soudures.

La tige de support (2) est une tige droite fabriquée avec un matériau très résistant, du type acier. En effet cette tige va servir de support lors de l'enfoncement des piquets (9), il est donc nécessaire qu'elle résiste à la pression lors de la frappe par la pièce de frappe (7) sur le piquet (9), c'est-à-dire qu'elle ne se plie pas ou ne se sectionne pas.

L'extrémité de la tige (2) qui n'est pas en relation avec la barre creuse (1) est en contact avec le sol (100) et comporte donc à cet effet une pièce plate (22) dont la section est plus large que celle de la tige de support (2). Cette pièce permet ainsi à la tige de support (2) de prendre appui sur le sol (100) sans s'enfoncer.

La barre creuse (1) comporte à son extrémité où se situe la pièce de frappe (7) des poignées (3,3'). Ces poignées (3,3') sont au nombre de deux et sont disposées perpendiculairement à la barre creuse (1), en vis-à-vis l'une de l'autre par rapport à la barre creuse (1) et de façon à être décalées par rapport à l'axe de la tige de support (2). Elles sont fixées à la barre creuse (1) par une soudure. Le rôle de ces poignées (3,3') est de pouvoir déplacer (10) la barre creuse (1) verticalement dans une direction opposée à celle du sol (100) d'une hauteur H, comme illustré sur la figure 2A. En relâchant les poignées (3,3') la barre creuse (1) va coulisser (11) vers le sol (100) et la pièce de frappe (7) venir au contact de l'extrémité (90) du piquet (9) à enfoncer comme illustré sur la figure 2B.

Chaque poignée comporte un élément (31, 31') de protection en matière plastique, du type caoutchouc. Cet élément (31, 31') en matière plastique à la forme d'un tube qui entoure la poignée. Il permet une meilleure préhension et une meilleure adhérence des mains de l'utilisateur lors de l'utilisation de la machine.

La machine ainsi décrite a un poids moyen d'environ 3,4 kg ce qui lui permet d'être portable. Un utilisateur de force moyenne peut donc l'utiliser.

Pour enfoncer un piquet (9) dans le sol avec cette machine il faut donc :
- insérer le piquet (9) dans la barre creuse (1),
- régler la hauteur de l'écrou de blocage (6) en fonction de la longueur de piquet (9) à enfoncer,
- déplacer (10) verticalement la barre creuse (1) à l'aide des poignées (3,3'),
- relâcher (11) la barre creuse (1) afin que la pièce de frappe (7) formant une masse inertielle frappe en direction du sol sur le piquet (9) et l'enfonce,
- répéter les étapes précédentes si nécessaire jusqu'à ce que le piquet (9) soit enfoncé à la profondeur voulue.

Il doit être évident pour l'homme du métier que la présente invention permet des modes de réalisation sous de nombreuses autres formes spécifiques sans l'éloigner du domaine d'application de l'invention comme revendiquée. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Machine manuelle portable pour enfoncer des piquets (9) comportant des moyens de mise en place et d'enfoncement des piquets dans le sol **caractérisée en ce que** les moyens de mise en place et d'enfoncement dans le sol sont constitués d'une barre creuse (1) dans lequel peut être inséré un piquet (9), la longueur de la barre creuse (1) étant inférieure à celle de la hauteur de dépassement souhaité du piquet (9) par rapport au sol, la barre creuse (1) comportant à une extrémité une pièce de frappe (7), de moyens de guidage (8) d'un piquet (9) insérés dans la barre creuse (1) et fixés à la barre creuse (1), de moyens de préhension (3,3') situés sous la pièce de frappe (7), la barre creuse (1) étant par au moins son autre extrémité solidaire, par une liaison (51,52) permettant un ajustement verticale par translation, d'une extrémité d'une tige de support (2) formant les moyens de support, disposée parallèlement à la barre creuse (1) et comportant au moins un moyen mobile de blocage (6) du déplacement de la barre creuse (1) lors de la translation verticale en direction du sol.

2. Machine manuelle portable pour enfoncer des piquets (9) selon la revendication 1 **caractérisée en ce que** les moyens de préhension sont constitués par deux poignées disposées en dessous de la pièce de frappe (7) en vis-à-vis l'une de l'autre, perpendiculairement par rapport à la barre creuse (1) et décalées angulairement par rapport à l'axe formé par la tige de support (2).

3. Machine manuelle portable pour enfoncer des piquets (9) selon une des revendications 1 à 2 **caractérisée en ce que** les moyens de guidage sont constitués par un fer plat (8) dont la longueur est supérieure à celle de la barre creuse (1) pour faciliter l'introduction et éviter le pliage du piquet (9) à sa sortie de la barre creuse (1).

4. Machine manuelle portable pour enfoncer des piquets (9) selon la revendication 3 **caractérisée en ce que** le fer plat (8) est fixé par un de ses cotés à la barre creuse (1) par au moins deux soudures réalisées à chacune des extrémités de la barre creuse (1) sur sa paroi interne verticale.

5. Machine manuelle portable pour enfoncer des piquets (9) selon la revendication 4 **caractérisée en ce que** la distance (d) entre le fer plat (8) et la paroi interne verticale de la barre creuse (1) est suffisamment grande pour permettre l'insertion de piquets (9) de différentes largeurs.

6. Machine manuelle portable pour enfoncer des piquets (9) selon une des revendications 1 à 5 **caractérisée en ce que** la pièce de frappe (7) est plate et de diamètre identique à celui de la barre creuse (1) et constitue avec la barre creuse (1) une masse, comprise entre 0,5 et 5 kg, suffisante pour permettre l'enfoncement du piquet (9).

7. Machine manuelle portable pour enfoncer des piquets (9) selon la revendication 6 **caractérisée en ce que** la pièce de frappe (7) comporte un viseur d'alignement (4) de forme rectangulaire fixé au centre de la pièce de frappe (7) sur la face opposée à celle en contact avec la barre creuse (1) permettant d'aligner la barre creuse (1) par rapport aux autres piquets.

8. Machine manuelle portable pour enfoncer des piquets (9) selon une des revendications 1 à 6 **caractérisée en ce que** la liaison permettant une translation verticale de la barre creuse (1) est réalisée avec au moins deux écrous de fixation (5) fixés sur la barre creuse (1) dans lesquels la tige de support (2) est insérée et coulisse, un premier écrou de fixation (5) étant fixé à l'extrémité de la barre creuse (1) opposée à celle ou se trouve la pièce de frappe (7), un deuxième écrou de fixation (5) étant fixé à une distance suffisante du premier écrou pour permettre à la tige de support (2) d'être maintenue parallèle à la barre creuse (1).

9. Machine manuelle portable pour enfoncer des piquets (9) selon une des revendications 1 à 8 **caractérisée en ce que** le moyen mobile de blocage de la barre creuse (1) est un écrou disposé autour de tige de support (2) de façon a être situé sous le premier écrou de fixation (5) de la barre creuse (1) pour le bloquer lors de translation verticale en direction du sol.

10. Machine manuelle portable pour enfoncer des piquets (9) selon une des revendications 1 à 9 **caractérisée en ce que** la tige de support (2) comporte à son extrémité en contact avec le sol une pièce plate et plus large que la tige de support (2) pour éviter son enfoncement dans le sol.

11. Machine manuelle portable pour enfoncer des piquets (9) selon une des revendications 1 à 10 **caractérisée en ce que** la tige de support (2) a une longueur égale ou supérieure à celle de la barre creuse (1).

12. Machine manuelle portable pour enfoncer des piquets (9) selon une des revendications 1 à 11 **caractérisée en ce que** la barre creuse a une section ronde ou en forme de parallélogramme.

13. Machine manuelle portable pour enfoncer des piquets (9) selon une des revendications 1 à 12 **caractérisée en ce que** chaque poignée comporte un élément (31, 31') en matière plastique en forme de tube, l'élément en matière plastique entourant la poignée.

14. Machine manuelle portable pour enfoncer des piquets (9) selon une des revendications 1 à 13 **caractérisée en ce que** deux poignées (60) sont fixées sur la barre creuse (1) en vis-à-vis l'une de l'autre et sont constituées chacune d'une barre pliée, fixée à ces deux extrémités sur la barre creuse (1), et tel que son axe d'alignement est colinéaire avec l'axe d'alignement de la barre creuse (1).

15. Machine manuelle portable pour enfoncer des piquets (9) selon une des revendications 1 à 14 **caractérisée en ce que** la barre creuse (1) comporte des fentes (70) à l'extrémité opposée de la pièce de frappe (7) permettant d'écarter des pans ainsi formés par les fentes, et permettant de donner une forme évasée à l'extrémité de la barre creuse (1).

16. Utilisation de la machine selon les revendications 1 à 15 **caractérisée en ce qu'**elle consiste à :
- insérer le piquet (9) dans la barre creuse (1),
- régler la hauteur de l'écrou de blocage en fonction de la longueur de piquet (9) à enfoncer,
- déplacer (10) verticalement la barre creuse (1) à l'aide des poignées,
- relâcher (11) la barre creuse (1) afin que la pièce de frappe (7) formant une masse inertielle frappe en direction du sol sur le piquet (9) et l'enfonce,
- répéter les étapes précédentes si nécessaire jusqu'à ce que le piquet (9) soit enfoncé à la profondeur voulue.

17. Piquet (9) de vigne adapté à la machine selon les revendications 1 à 15 **caractérisé en ce qu'**il a une forme en U lui permettant d'être introduit par coulissement dans la barre creuse (1) autour du fer plat (8).

18. Piquet (9) de vigne selon la revendication 17 **caractérisé en ce qu'**il comporte sur les deux cotés formant les branches du U des crochets (91) formés par le découpage du piquet (9).
